# EUROPEAN PATENT APPLICATION

(11) **EP 3 059 487 A1**
(43) Date of publication of application: **24.08.2016**
(21) Application number: 15155809.5
(22) Date of filing: 19.02.2015
(51) Int. Cl.: F16N 39/06, C10M 175/00, B01D 39/16

(54) **Oil cleaning process and system**

(71) Applicant: Melika International Business Handelsbolag, 861 32 Timra (SE)
(72) Inventor: Salehi Movahed, Alireza, 125 72 ÄLVSJÖ (SE); Salehi Movahed, Abdolreza, 861 32 TIMRÅ (SE)
(74) Representative: Awapatent AB

(57) **Abstract**

A process for cleaning lubricant or hydraulic oil, comprising the step a) bringing a lubricant or hydraulic oil to be cleaned into contact with lignin or a derivative thereof immobilized on or in a solid substrate surface, said solid substrate surface being essentially free from cellulose. A lubricant or hydraulic oil cleaning system (105) comprising: a first cleaning chamber (106) arranged to receive lubricant or hydraulic oil to be cleaned, said first cleaning chamber (106) comprising lignin or a derivative thereof immobilized on or in a solid substrate surface, said solid substrate surface being essentially free from cellulose. Use of a lignin or a derivative thereof immobilized on or in a solid substrate surface, said solid substrate surface being essentially free from cellulose, for the cleaning of lubricant or hydraulic oil.

## Description

### FIELD OF THE INVENTION

The present invention relates to a process and a system for cleaning lubricant or hydraulic oil, comprising the step of bringing a lubricant or hydraulic oil to be cleaned into contact with lignin or a derivative thereof immobilized on or in a solid substrate surface, said solid substrate surface being essentially free from cellulose.

### BACKGROUND OF THE INVENTION

The most common wind turbine designs use gearboxes in the drive train. The focus on the life span of the gearbox has increased during the last 10 years. One potential factor affecting the life span is oil cleanliness. Oil cleanliness has a large affect on the wear of gearbox components such as rolling element bearings and gears. It is estimated that the oil cleanliness can increase or reduce life up to 50% for an otherwise well functioning gearbox.

The most common base oils used in gearboxes are mineral oil, poly-alfa-olefins (PAOs), poly-ethylene-glycols (PEGs) and synthetic esters.

One important parameter affecting the lubricating properties is oxidation of the lubricant base oil. The negative consequences of base oil oxidation include for example corrosion, sludge, varnish and impaired oil flow.

The rate of oxidation of the base oil is affected by a range of different factors. As in all chemical processes, oil oxidation is dependent on temperature of the oil. Metals like iron and copper are also known to act as catalysts in oil oxidation. Water is a natural accelerator of oil oxidation. High water content in combination with metals such as copper can significantly increase the oxidation rate. Air also increases the rate of oxidation and thermal degradation.

To reduce base oil oxidation, gear oils are often provided with a number of different additives to minimize oxidation of the oil and to enhance oil performance. However, high temperatures in combination with metal particles and water can quickly consume antioxidants leaving the lubricant base oil unprotected.

To reduce the amount of particles, the oil is typically passed through an oil filter. Oil filter media are commonly prepared from paper, cellulose, fiber glass or metals. The most common materials are paper or cellulose, due to their good filtration properties in combination with high availability and low price. A further advantage of using cellulose based filter media is that they can also absorb water.

Oil filters can generally be divided into in-line and off-line filters. In in-line filters the entire lubricant volume is passed through the filter before entering the gearbox. In-line filters are typically capable of removing larger particles from a high oil flow. A filter pore size of less than 10 µm is normally not feasible due to unacceptable pressure drop across the filter. In an off-line filter, a portion of the main oil flow is withdrawn, filtered in a separate oil filter, and then reunited with the main oil flow. Off-line filters are typically useful for removing smaller particles from the oil, e.g. particles below 5 µm size.

Investigations on particle size distribution in used oil have shown that the majority of insoluble contaminants are below 5 µm size (according to ISO 11171 definition), in some cases up to almost 90% (w/w) of the total contamination.

Particulate contamination in lubricant oil may typically comprise "hard particles" and "soft particles". Hard particles typically result from surface wear and remains from the manufacturing process of the gearbox. Soft particles are typically comprised of contamination formed during the lubricant and additive oxidation and degradation process.

### SUMMARY OF THE INVENTION

It is an object of the present invention to provide an oil cleaning process which can reduce the rate of degradation of a lubricant or hydraulic oil, thereby increasing the life span of the lubricant or hydraulic oil.

The present invention is based on the realization by the inventors that the rate of base oil oxidation can be effectively reduced by bringing the oil into contact with lignin or a derivative thereof, before subjecting the oil to conventional particle filtration. Without wishing to be bound by any particular theory, it is believed that the lignin or derivative thereof, and particularly phenolic monomers present therein, act as antioxidants, reacting with oxidative chemical species present in the oil.

The lignin effect has been found to be particularly pronounced in processes where cellulose based filter media are used for particle filtration. This is believed to be due to a catalytic effect of the cellulose on the base oil oxidation processes. Thus, in a process using cellulose based filter media for particle filtration, it is important that the lignin treatment of the oil is performed first, in the absence of cellulose, or at least essentially in the absence of cellulose, before performing the particle filtration using cellulose based filter media.

Accordingly , the solid substrate surface used in accordance with the present invention is free or, essentially free, from cellulose. By "essentially free from cellulose" is meant that the surface concentration of cellulose at the solid substrate surface is at least less than 10%, preferably less than 2%, more preferably less than 1 % of the surface concentration of lignin at the same solid substrate surface. In a preferred embodiment, the solid substrate surface is free from cellulose. Too much cellulose in the solid substrate surface may effectively reduce or eliminate the positive lignin effect.

In accordance with a first aspect of the present invention there is provided a process for cleaning lubricant or hydraulic oil, comprising the step
a) bringing a lubricant or hydraulic oil to be cleaned into contact with lignin or a derivative thereof immobilized on or in a solid substrate surface, said solid substrate surface being essentially free from cellulose.

In some embodiments, the oil to be cleaned is a lubricant oil. In some embodiments the oil to be cleaned is a gearbox lubricant oil.

The oil is brought into contact with lignin or derivative thereof by contacting oil with a solid substrate surface comprising exposed molecules of the lignin or derivative thereof. The contact can be provided in a number of different ways, e.g. passing the oil through a conduit coated on the inside with the lignin or derivative thereof, passing the oil through a porous body coated on the inside with the lignin or derivative thereof, or by adding particles coated with the lignin or derivative thereof to the oil and subsequently separating the particles from the oil.

The contacting step a) should preferably be performed under conditions allowing the lignin to react with oxidative chemical species present in the oil. To increase the oil cleaning capacity, the specific surface area of the solid substrate surface can be increased and or the oil flow rate be adjusted.

In some embodiments, the solid substrate surface is an inner surface of a conduit through which the oil to be cleaned is passed, or a surface of a porous body through which the oil to be cleaned is passed.

In some embodiments, the lignin or a derivative thereof immobilized on or in a solid substrate surface, comprises a pure lignin. In some embodiments, the lignin or a derivative thereof immobilized on or in a solid substrate surface, comprises a combination of a lignin and another polymer other than cellulose.

Lignin refers to a complex polymer of aromatic alcohols known as monolignols. The molecular weight is typically above 10 000 Da. Lignin is most commonly derived from wood, plants, and some algae.

Lignin is formed by oxidative coupling of monolignols, brought about by peroxidase enzymes. Different plants use different monolignols. The main monolignols are coniferyl alcohol, sinapyl alcohol and paracoumaryl alcohol. The lignols are present in lignin in the form of the phenylpropanoids p-hydroxyphenyl (H), guaiacyl (G), and syringyl (S), respectively. The monolignol monomers may be methoxylated to various degrees.

The lignin used in the present oil cleaning process can be native lignin or a derivative thereof, having similar antioxidant properties as lignin.

The term "derivatives of lignin" or "lignin derivatives", as used herein, refers to molecules that have been derived from native lignin, comprise at least one monolignol residue, and have similar antioxidant properties as lignin. Examples of lignin derivatives include, but are not limited to, fragments of natural lignins, chemically modified (e.g. alkylated or alkenylated) lignins, and/or cross-linked lignins. Examples of lignin derivatives also include, but are not limited to, single monolignols or short chains comprised of few monolignol monomers or monolignol oligomers.

Particularly, the lignin derivatives may include one or more of the following moieties: Guaiacol; 4-methylguaiacol; 4-vinylguaiacol; Isoeugenol; Vanillin; Coniferaldelyde; Ferulic acid; Tannin; p-coumaryl alcohol; Coniferyl alcohol; Sinapyl alcohol; Syringol; Lignans (Pinoresinal); Stilbenes (Pinosylvin); Tannins (Gallica); Flavanoids (catechin); Tropolones (Thujaplicin); Ellagic acid; Cinnamyl phenols; p-hydroxyphenols; Vanillic acid; Syringyl phenols; p-coumaric acid; p-hydroxybenzaldehyde; Syringaldehyde; p-hydroxyacetophenone; Acetovanillone; Acetosyringone; p-hydroxybenzoic acid; Syringic acid; Lignolphenol; p-coumaryl alcohol; Coniferyl alcohol; Sinapyl alcohol; Coniferaldehyde; Dihydroconiferyl; Coniferyl alcohol-9-acetate; 5-hydroxyconiferyl alcohol.

Some examples of useful lignin containing materials include, but are not limited to softwood and hardwood pulp, pine kraft pulp, aspen kraft pulp, spruce pulp, birch pulp, eucalyptus pulp, bagasse (sugar cane pulp), bamboo pulp, cotton pulp, esparto pulp, flax pulp, hemp pulp, jute pulp, kenaf pulp, knotter pulp, kraft pulp lignin of Gymnosperms, Angiosperm (Eudicotyledone) and Angiosperms (Monocotyledone) plants.

The immobilized lignin or lignin derivative is provided in a solid form which is preferably insoluble in both oil and water such that lignin or other components of the solid material are not released into the lubricant.

The lignin or derivative thereof may be in pure form or may be provided in the form of a composite or mixture with other components. Composites or mixtures typically comprise the lignin or derivative thereof combined with another synthetic or natural polymer. Composites or mixtures should preferably comprise at least 5% by weight, such as at least 10% by weight, such as at least 20% by weight, such as at least 30% by weight, such as at least 40% by weight, such as at least 50% by weight of the lignin or derivative thereof.

Examples of composites or mixtures of the lignin or derivative thereof with another synthetic or natural polymer include, but are not limited to, high-lignin polypropylene; lignin-based epoxy resin composites; lignin-based polyurethanes; alkenyl lignins; and lignin blended with polyethylene glycol

(PEG) that has been subjected to subsequent carbonization by heating at high temperature (over 900 °C), followed by thermal stabilization at 220 °C.

The solid substrate surface used in accordance with the present invention is free or, essentially free, from cellulose. By "essentially free from cellulose" is meant that the content of cellulose at the solid substrate surface is at least less than 10%, preferably less than 2%, more preferably less than 1% of the content of lignin at the same solid substrate surface, by weight. Too much cellulose in the solid substrate surface may effectively reduce or eliminate the positive lignin effect.

Step a) serves to reduce the concentration of oxidative chemical species present in the oil. In order to reduce the concentration of particulate material, the oil may also be subjected to filtration.

Thus, in some preferred embodiments the process for cleaning the lubricant or hydraulic oil further comprises the subsequent step
b) passing the lubricant or hydraulic oil through at least one particle filter to remove particulate material from the lubricant or hydraulic oil.

The particle filter may comprise essentially any porous filter medium suitable for filtration of particulate material from oil. The filter medium may for example comprise a metal, plastic, or cellulose based fibrous or non-woven filter material of suitable porosity. It is particularly preferred that the particle filter comprises a cellulose based filter medium. Cellulose based filter media are advantageous because of their good filtration properties, ability to absorb moisture from the oil, and their relatively low cost and high availability.

In some embodiments, the step b) comprises passing the oil through a particle filter comprising cellulose.

In some embodiments, the particle filter of step b) comprises a combination of lignin and cellulose. Using a combination of lignin and cellulose allows for utilization of a range of lower value product streams in the papermaking process, which may help keep the cost of the particle filter as low as possible.

In some embodiments, the step b) comprises passing the oil through a particle filter comprising both lignin and cellulose.

In addition, the use of particle filters having a combination of lignin and cellulose allows for optimization of the lignin antioxidant effect. Particularly, the oil may be passed through a series of particle filters having an increasing cellulose/lignin weight ratio. This way, the oil may first be passed through one or more filters having a high lignin content and correspondingly high lignin antioxidant effect, and then through one or more filters having successively higher cellulose content and correspondingly higher filtration properties related to the cellulose.

Thus, in some preferred embodiments, the step b) comprises passing the oil through a first and a second particle filter, both particle filters comprising lignin and cellulose, the first particle filter having a lower cellulose/lignin weight ratio than the second particle filter.

Examples of materials comprising both lignin and cellulose that could be used for preparing particle filters comprising a combination of lignin and cellulose include, but are not limited to:
- Mechanical pulp, e.g. mechanical pulp having a lignin content in the range of 10-60% by weight;
- CTMP (chemi-thermomechanical) pulp;
- TMP (thermomechanical) pulp;
- NSSC (Neutral Sulfite Semi Chemical) pulp;
- PGW (pressurized groundwood) pulp;
- Chemical pulp after pulp cooking process (e.g. chemical pulp having a Kappa number in the range of 35 to 11);
- Chemical pulp after pulp cooking and bleaching process (e.g. chemical pulp having a Kappa number in the range of 10 to 0);
- Modified lignins, such as lignin crosslinked or grafted with celluloses, carbohydrates, polystyrene, polypropylene carbonate, polyethylene terephthalate.

The process described herein with reference to the first aspect, may advantageously be implemented in an oil cleaning system.

In accordance with a second aspect of the present invention there is provided a lubricant or hydraulic oil cleaning system comprising
a first cleaning chamber arranged to receive lubricant or hydraulic oil to be cleaned, said first cleaning chamber comprising lignin or a derivative thereof immobilized on or in a solid substrate surface, said solid substrate surface being essentially free from cellulose.

In some embodiments, the solid substrate surface is an inner surface of the first cleaning chamber or a surface of a porous body disposed within the first cleaning chamber.

In some embodiments, the lignin or a derivative thereof immobilized on or in a solid substrate surface, comprises a pure lignin or a combination of a lignin and another polymer other than cellulose.

In some preferred embodiments, the lubricant or hydraulic oil cleaning system further comprises
a second cleaning chamber arranged to receive lubricant or hydraulic oil from the first cleaning chamber, said second cleaning chamber said comprising a particle filter.

In some embodiments, the particle filter comprises cellulose. In some embodiments, the particle filter comprises both lignin and cellulose.

In some embodiments, the particle filter comprises a first and a second particle filter, both particle filters comprising lignin and cellulose, the first particle filter having a lower cellulose/lignin weight ratio than the second particle filter.

In accordance with a third aspect of the present invention there is provided the use of a lignin or a derivative thereof immobilized on or in a solid substrate surface, said solid substrate surface being essentially free from cellulose, for the cleaning of lubricant or hydraulic oil.

It is contemplated that features of one embodiment may also be incorporated in other embodiments without further recitation.

### BRIEF DESCRIPTION OF THE DRAWINGS

The invention will now be described in more detail and with reference to the appended drawings.
Fig. 1 is a flow chart, schematically illustrating the lubricant or hydraulic oil cleaning process.
Fig. 2 is a schematic view of an embodiment of the lubricant or hydraulic oil cleaning system.

It is to be noted that the appended drawings illustrate only exemplary embodiments of the invention, and are therefore not to be considered limiting of its scope. Other, equally effective embodiments may also be encompassed by the invention as claimed.

### DESCRIPTION OF PREFERRED EMBODIMENTS

The invention will be described herein with reference to the specific application of lubrication and lubricant cleaning in wind turbine gearboxes. It should be understood that the invention is not limited to this specific application, but can also be employed in virtually any other application, e.g. in hydraulics, where base oil oxidation is a problem and oil cleaning is required.

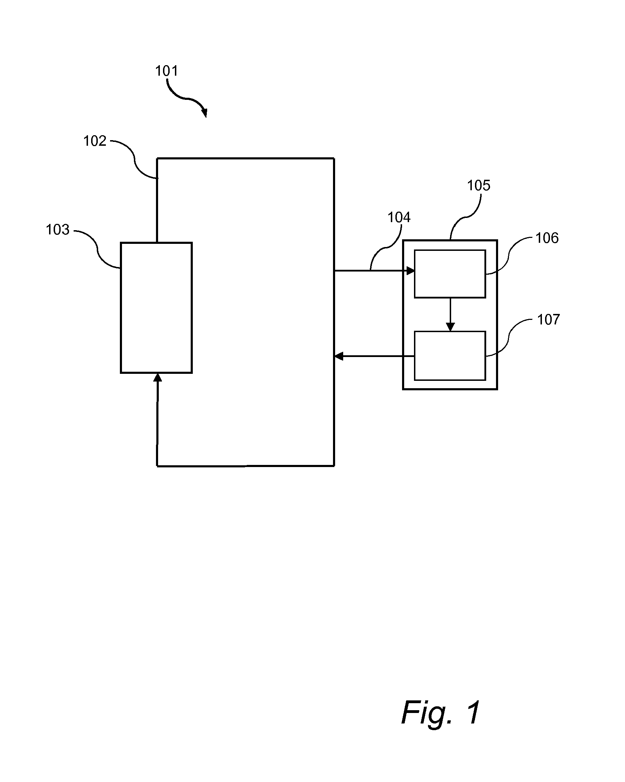

In Figure 1, the general process of the invention is illustrated. A system 101 for recirculation and cleaning of lubricant oil for a gearbox comprises a main lubricant circuit 102 for providing lubricant to a gear box 103. The system 101 further comprises a lubricant cleaning circuit 104 for withdrawing a portion of the lubricant from the main lubricant circuit, cleaning the lubricant in a lubricant cleaning system 105, and returning the cleaned lubricant to the main lubricant circuit.

The lubricant cleaning system 105 comprises a first cleaning chamber 106 in which the lubricant withdrawn from the main lubricant circuit is brought into contact with a solid material comprising immobilized lignin. The immobilized lignin acts as an antioxidant by reacting with oxidative chemical species present in the lubricant.

The lubricant cleaning system 105 comprises a second cleaning chamber 107 in which the lubricant having a reduced concentration of oxidative chemical species coming from the first cleaning chamber 106 is passed through a series of cellulose based particle filters to remove particulate material from the lubricant.

The lubricant oil thus reduced in oxidative chemical species and particulate material is then returned to the main lubricant circuit 102 via the lubricant cleaning circuit 104 for reuse in the gear box 103.

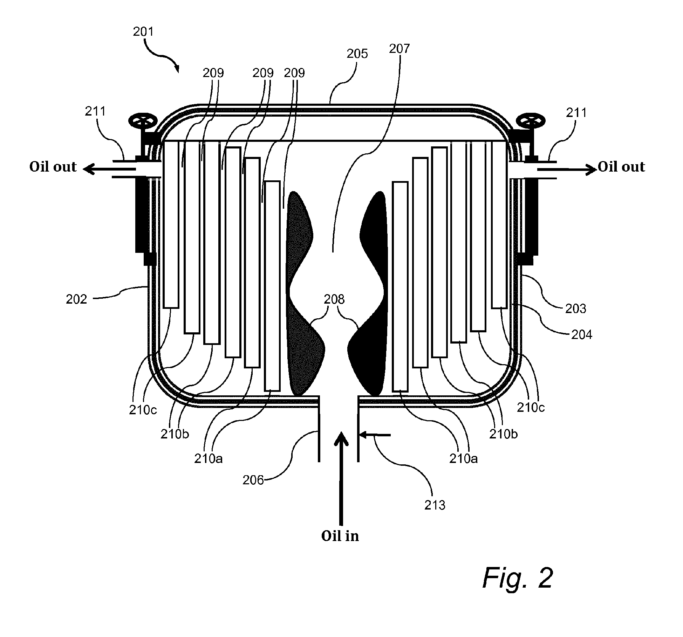

A schematic side view cross section of one embodiment of the oil cleaning system is shown in figure 2. The lubricant oil cleaning system 201 comprises a container 202 with an outer shell 203 and a ceramic inner coating 204. The container 202 has an openable lid 205, which can be opened and closed by a hydraulic cylinder. Through an oil inlet 206 in the center of the bottom of the container 202, the lubricant oil is pumped into and then passed through a conduit 207 having an essentially cellulose free inner solid surface 208 made of lignin composite material. The conduit 207 reaches up to around three quarters of the height of the container 202. Surrounding the length of the conduit 207 at increasing distance from the conduit 207 a number of cylindrical filters 210a, 210b, 210c, such as six cylindrical filters, of increasing cylinder diameter, are arranged concentrically, with spaces 209 in between them. The cylindrical filters 210a, 210b, 210c are also placed at an increasing distance from the bottom of the container 202.

The cylindrical filters are arranged with an overall increasing cellulose/lignin weight ratio. The first couple of filters 210a, have a low cellulose/lignin weight ratio. The second couple of filters 210b are made out of a semi-processed pulp with higher cellulose/lignin weight ratio such as mechanical pulp. The third couple of filters 210c are conventional cellulose particle filters. The lubricant oil that has passed up through the conduit 207 may come in contact with the inner lid surface, which may optionally also be covered with the essentially cellulose free lignin composite material (not shown). The base oil then passes through the filters 210a, 210b, 210c and/or through the spaces 209 between the filters 210a, 210b, 210c, whereby particulate material present in the lubricant oil is captured in the cylindrical filters. The oil is first be passed through one or more filters having a high lignin content and correspondingly high lignin antioxidant effect, and then through one or more filters having successively higher cellulose content and correspondingly higher filtration properties related to the cellulose. This way, the use of particle filters having a combination of lignin and cellulose also allows for optimization of the lignin antioxidant effect. Cleaned oil leaves the oil cleaning system via oil outlets 211 placed on the upper part of the sides of the container 202. The lubricant oil filtering system 201 may optionally have a cooling system (not shown), configured to reduce the temperature of the lubricant oil to 5-70 °C, e.g. by cooling portions of the outer shell 203 of the container 202. The lubricant oil filtering system 201 may also optionally comprise a gas inlet 213 arranged at the oil inlet 206, for adding inert gas, such as nitrogen, argon or carbon dioxide, to the lubricant oil. By lowering the temperature and/or providing an inert gas atmosphere, the rate of oxidation can be reduced, which further extends the life span of the lubricant oil.

The conduit 207 and the cylindrical filters 210a, 210b, 210c can be replaced by opening the openable lid 205, removing the used conduit 207 and the used cylindrical filters 210a, 210b, 210c by lifting them out, and replacing them with a new conduit and new cylindrical filters.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to any particular embodiments disclosed herein, but that the invention will include all embodiments falling within the scope of the appended claims.

## Claims

1. A process for cleaning lubricant or hydraulic oil, comprising the step
a) bringing a lubricant or hydraulic oil to be cleaned into contact with lignin or a derivative thereof immobilized on or in a solid substrate surface, said solid substrate surface being essentially free from cellulose.

2. A process according to claim 1, wherein said solid substrate surface is an inner surface of a conduit through which the lubricant or hydraulic oil to be cleaned is passed or a surface of a porous body through which the lubricant or hydraulic oil to be cleaned is passed.

3. A process according to any one of the preceding claims, wherein said lignin or a derivative thereof immobilized on or in a solid substrate surface, comprises a pure lignin or a combination of a lignin and another polymer other than cellulose.

4. A process according to any one of the preceding claims, further comprising the subsequent step of:
b) passing the lubricant or hydraulic oil through at least one particle filter to remove particulate material from the lubricant or hydraulic oil.

5. A process according to claim 4, wherein step b) comprises passing the lubricant or hydraulic oil through a particle filter comprising cellulose.

6. A process according to claim 5, wherein step b) comprises passing the lubricant or hydraulic oil through a particle filter comprising both lignin and cellulose.

7. A process according to claim 6, wherein step b) comprises passing the lubricant or hydraulic oil through a first and a second particle filter, both particle filters comprising lignin and cellulose, the first particle filter having a lower cellulose/lignin weight ratio than the second particle filter.

8. A lubricant or hydraulic oil cleaning system comprising:
a first cleaning chamber arranged to receive lubricant or hydraulic oil to be cleaned, said first cleaning chamber comprising lignin or a derivative thereof immobilized on or in a solid substrate surface, said solid substrate surface being essentially free from cellulose.

9. A lubricant or hydraulic oil cleaning system according to claim 8, wherein said solid substrate surface is an inner surface of the first cleaning chamber or a surface of a porous body disposed within the first cleaning chamber.

10. A lubricant or hydraulic oil cleaning system according to any one of claims 8-9, wherein said lignin or a derivative thereof immobilized on or in a solid substrate surface, comprises a pure lignin or a combination of a lignin and another polymer other than cellulose.

11. A lubricant or hydraulic oil cleaning system according to any one of claims 8-10, further comprising a second cleaning chamber arranged to receive lubricant or hydraulic oil from the first cleaning chamber, said second cleaning chamber said comprising a particle filter.

12. A lubricant oil cleaning system according to claim 11, wherein said particle filter comprises cellulose.

13. A lubricant oil cleaning system according to claim 12, wherein said particle filter comprises both lignin and cellulose.

14. A lubricant oil cleaning system according to claim 13, wherein the particle filter comprises a first and a second particle filter, both particle filters comprising lignin and cellulose, the first particle filter having a lower cellulose/lignin weight ratio than the second particle filter.

15. Use of a lignin or a derivative thereof immobilized on or in a solid substrate surface, said solid substrate surface being essentially free from cellulose, for the cleaning of lubricant or hydraulic oil.
